# EUROPÄISCHE PATENTSCHRIFT

(11) **EP 4 310 399 B1**
(45) Veröffentlichungstag und Bekanntmachung des Hinweises auf die Patenterteilung: **19.03.2025**
(21) Anmeldenummer: 23186137.8
(22) Anmeldetag: 18.07.2023
(51) Int. Cl.: F23R 3/28, F02C 7/22

(54) **DÜSENVORRICHTUNG ZUR ZUGABE VON KRAFTSTOFF IN EINE BRENNKAMMER EINER GASTURBINENANORDNUNG UND GASTURBINENANORDNUNG**
NOZZLE DEVICE FOR ADDING FUEL TO A COMBUSTOR OF A GAS TURBINE ASSEMBLY AND GAS TURBINE ASSEMBLY
DISPOSITIF DE BUSE POUR AJOUTER DU CARBURANT À UNE CHAMBRE DE COMBUSTION D'UN ENSEMBLE TURBINE À GAZ ET ENSEMBLE TURBINE À GAZ

(30) Priorität: 21.07.2022 DE 102022207490
(43) Veröffentlichungstag der Anmeldung: 24.01.2024
(73) Patentinhaber: Rolls-Royce Deutschland Ltd & Co KG, 15827 Blankenfelde-Mahlow (DE)
(72) Erfinder: Clemen, Carsten, 15827 Blankenfelde-Mahlow (DE); GEBEL, Gregor Christoffer, 15827 Blankenfelde-Mahlow (DE)

(56) Entgegenhaltungen:
- DE-A1- 102018 204 741
- US-A- 3 159 971
- US-A1- 2015 082 770
- US-B1- 6 354 085
- US-B1- 6 530 223

## Beschreibung

Die Erfindung betrifft eine Düsenvorrichtung zur Zugabe von Kraftstoff in eine Brennkammer einer Gasturbinenanordnung nach dem Oberbegriff des Anspruchs 1. Die Erfindung betrifft ferner eine Gasturbinenanordnung, insbesondere ein Triebwerk eines Luftfahrzeugs.

Eine Düsenvorrichtung der eingangs genannten Art, mit einem Düsenhauptkörper zur Einspritzung des Kraftstoffes in die Brennkammer und einem Düsenhalter mit zumindest einer Kraftstoffleitung zur Strömungsverbindung zwischen einer Verteiler-Kraftstoffleitung eines Kraftstoff-Verteilers und dem Düsenhauptkörper geht beispielsweise aus der EP 0 071 420 A1 hervor.

Eine Düsenvorrichtung gemäß dem Oberbegriff des Anspruchs 1 ist aus der US 6,530,223 B1 bekannt.

Es wird (ohne druckschriftlichen Nachweis) als bekannt angenommen, dass eine Düsenvorrichtung der eingangs genannten Art ein stromab der Verteiler-Kraftstoffleitung, insbesondere am stromaufseitigen (eintrittsseitigen) Ende der Kraftstoffleitung, angeordnetes Drosselelement zur Drosselung des Kraftstoffflusses (Mengenstroms) auf eine vorgegebene Sollmenge, zur Zugabe über den Düsenhauptkörper in die Brennkammer im Betrieb, aufweisen kann.

Bei Kraftstoffen mit geringer Dichte, betreffend insbesondere gasförmige Kraftstoffe wie Methan und/oder Wasserstoff, können bei der Drosselung des Kraftstoffflusses unter Einstellung des dazu erforderlichen Druckabfalls über die Düsenvorrichtung, z. B. mittels des Drosselelements, hohe Geschwindigkeiten, von mehreren hundert Metern pro Sekunde, auftreten. Dies bewirkt Nachteile im Betrieb der Düsenvorrichtung, beispielsweise eine reduzierte Aufenthaltszeit des Kraftstoffes innerhalb des Brennraums und/oder eine unzureichende Durchmischung verbunden mit einem ungünstigen Temperaturprofil am Brennkammeraustritt bzw. am Turbineneintritt.

Der vorliegenden Erfindung liegt die Aufgabe zugrunde, eine Düsenvorrichtung sowie eine Gasturbinenanordnung für einen optimierten Betrieb mit gasförmigen Kraftstoffen bereitzustellen.

Die Aufgabe wird bezüglich der Düsenvorrichtung mit den Merkmalen des Anspruchs 1 gelöst. Vorteilhafte Ausgestaltungsvarianten sind in den abhängigen Ansprüchen angegeben.

Bezüglich der Gasturbinenanordnung wird die Aufgabe mit den Merkmalen des Anspruchs 14 gelöst.

Zur Lösung der Aufgabe wird bezüglich der Düsenvorrichtung vorgeschlagen, dass das Drosselelement zumindest zwei strömungstechnisch in Reihe angeordnete Stufen umfasst, wobei jede Stufe zumindest einen entlang einer Mittellängsachse ausgerichteten Leitungsabschnitt (insbesondere der Kraftstoffleitung) mit einem Strömungsquerschnitt aufweist, der z. B. jeweils kreisförmig mit einem Durchmesser (oder elliptisch oder polygonal) ausgebildet ist, und wobei zwischen den Stufen, ggf. jeweils, eine Entspannungskammer angeordnet ist, deren Strömungsquerschnitt größer ist als der Strömungsquerschnitt der (unmittelbar, ohne Zwischenordnung einer weiteren Stufe) stromauf dazu angeordneten Stufe, d. h. des in die Entspannungskammer mündenden Leitungsabschnitts der entsprechenden Stufe.

Das Drosselelement umfasst somit n Stufen Sx, mit n zumindest zwei, wobei die einzelnen Stufen Sx = 1...n strömungstechnisch in Reihe angeordnet sind. Die erste Stufe ist dabei am weitesten stromauf angeordnet, die n-te Stufe am weitesten stromab, die übrigen Stufen in entsprechender Reihenfolge dazwischen.

Die Leitungsabschnitte der jeweiligen Stufen sind z. B. zylindrisch und/oder drehsymmetrisch zu ihren jeweiligen Mittellängsachsen ausgebildet, und/oder weisen einen hinsichtlich der Anordnung relativ zu den anderen Leitungsabschnitten optimierte Formgebung auf. Für eine strömungsgünstige Form können vorhandene Kanten gerundet ausgebildet sein.

Beispielsweise weist jede Stufe genau einen Leitungsabschnitt auf.

Die axiale Erstreckung der Leitungsabschnitte und/oder der Entspannungskammern ist für eine kompakte Bauweise vorzugsweise möglichst gering, im Falle der Leitungsabschnitte in Art einer Blende, jedoch ausreichend groß, um den erwünschten Effekt bezüglich Druckverlust und/oder Entspannung zu erzielen. Z. B. kann die axiale Erstreckung der jeweiligen Leitungsabschnitte zumindest im Wesentlichen gleich groß sein. Die axiale Erstreckung beträgt weniger als ein Durchmesser Ds der Kraftstoffleitung stromab des Drosselelements, z. B. weniger als die Hälfte des Durchmessers Ds.

Die Leitungsabschnitte der jeweiligen Stufen weisen z. B. einen kreisförmigen oder andersförmigen, z. B. elliptischen oder polygonalen, über die axiale Erstreckung konstanten Strömungsquerschnitt auf. Bei einem kreisförmigen Strömungsquerschnitt, auch der übrigen Leitungen (Verteiler-Kraftstoffleitung, Abschnitt der Kraftstoffleitung stromab des Drosselelements), gelten nachfolgend angegebene, relative Verhältnisse der Strömungsquerschnitte auch für die Durchmesser der Leitungen, da die Strömungsquerschnitte alleine von den Durchmessern abhängen.

Die Kraftstoffleitung stromab des Drosselelements weist z. B. zumindest unmittelbar stromab des Drosselelements und/oder großteils über ihre axiale Erstreckung einen konstanten Strömungsquerschnitt, mit dem Durchmesser Ds, auf.

Durch die vorgeschlagene Ausbildung des Drosselelements kann die erforderliche Drosselung des Kraftstoffflusses auf die vorgegebene Sollmenge auch bei Kraftstoffen mit geringer Dichte, insbesondere Wasserstoff, bei geringeren Strömungsgeschwindigkeiten erfolgen. Dadurch werden stark erhöhte Strömungsgeschwindigkeiten und damit verbundene Nachteile vermieden und ein optimierter Betrieb der Düsenvorrichtung und/oder der Gasturbinenanordnung auch mit z. B. Wasserstoff oder wasserstoffhaltigen Kraftstoffen ermöglicht.

Eine effektive Drosselwirkung kann erzielt werden, wenn zumindest einer der, vorzugsweise alle, Leitungsabschnitte innerhalb des Drosselelements (d. h. der einzelnen Stufen) einen geringeren Strömungsquerschnitt (mit Durchmessern Do1 ... Don) aufweist/aufweisen als die Verteiler-Kraftstoffleitung (mit dem Durchmesser Dm) und/oder die Kraftstoffleitung (unmittelbar) stromab des Drosselelements (mit dem Durchmesser Ds). Vorzugsweise ist der Strömungsquerschnitt der Verteiler-Kraftstoffleitung größer als der Strömungsquerschnitt der Kraftstoffleitung stromab des Drosselelements.

Eine strömungsgünstige Drosselung kann bewirkt werden, wenn die am weitesten stromauf angeordnete, erste, Stufe den größten Strömungsquerschnitt der vorhandenen Stufen, insbesondere den größten Durchmesser, aufweist.

Insbesondere in diesem Zusammenhang ist es strömungstechnisch vorteilhaft, wenn die strömungstechnisch (unmittelbar, ohne Zwischenordnung einer weiteren Stufe) stromab einer Stufe angeordneten Stufen jeweils einen gleichen oder kleineren Strömungsquerschnitt, insbesondere Durchmesser, aufweisen wie oder als die jeweils (unmittelbar) stromauf angeordnete Stufe. Insbesondere kann gelten, für n ≥ 2: Dm > Ds > Do1 ≥ ... ≥ Don, z. B. Dm > Ds > Do1 ≥ Do2 ≥ Do3 (für n = 3) oder Dm > Ds > Do1 ≥ Do2 (für n = 2).

In einer bevorzugten Ausbildungsvariante sind die Leitungsabschnitte zumindest teilweise koaxial zueinander angeordnet. Die Mittellängsachsen der Leitungsabschnitte und/oder die Mittellängsachse der stromab des Drosselelements angeordneten Kraftstoffleitung liegen dabei aufeinander.

Der Leitungsabschnitt zumindest einer der Stufen ist mit seiner Mittellängsachse radial versetzt zu der Mittellängsachse zumindest einer anderen Stufe und/oder zu der Mittellängsachse der Kraftstoffleitung stromab des Drosselelements angeordnet, wobei die Mittellängsachsen z. B. parallel zueinander verlaufen. Die Entspannungskammern sind insbesondere, z. B. jeweils, koaxial zu der Mittellängsachse angeordnet.

Dabei kann zweckmäßigerweise der Versatz zumindest zweier Leitungsabschnitte, vorzugsweise zweier (unmittelbar) aufeinanderfolgender Stufen, radial und/oder in Umlaufrichtung unterschiedlich ausgebildet sein. Z. B. können zwei (oder mehr) aufeinanderfolgende Stufen (jeweils abwechselnd) in Umlaufrichtung, um zwischen 90° und 270°, z. B. um im Wesentlichen 180°, versetzt zueinander angeordnet sein. Der so erhaltene abwechselnde Versatz der Leitungsabschnitte trägt vorteilhaft zur Erhöhung des Druckverlusts bei.

Vorteilhafterweise kann der Versatz derart ausgebildet sein, dass die Strömungsquerschnitte der Leitungsabschnitte zumindest zweier aufeinanderfolgender Stufen bezüglich ihrer radialen Position und/oder Position in Umlaufrichtung wenig, z. B. maximal um 20% des (ggf. kleineren) Strömungsquerschnitts, oder nicht überlappen, d. h. die Strömungsquerschnitte weisen zumindest großteils unterschiedliche radialen Positionen und/oder Positionen in Umlaufrichtung auf. In axialer Richtung betrachtet, wird so eine geometrische Überschneidung aufeinanderfolgender Strömungsquerschnitte vermieden oder zumindest minimiert. Auf diese Weise kann verhindert werden, dass einzelne Stromfäden axial durch das Drosselelement hindurchschießen und somit die Drosselwirkung herabsetzen. Insbesondere kann es dabei zweckmäßig sein, wenn die einzelnen Strömungsquerschnitte in einer anderen als kreisrunder oder polygonaler Form ausgebildet sind, mit einer für eine derartig versetzte Anordnung, relativ zu den anderen Leitungsabschnitten, optimierten Formgebung, z. B. halbkreisförmig, elliptisch und/oder sichelförmig. Dabei können die Formen der Strömungsquerschnitte der aufeinanderfolgenden Stufen z. B. kongruent sein, oder jeweils eine andere, für diese Ausbildung günstige Formgebung aufweisen, z. B. sichelförmig und kreisförmig kombiniert. Die Mittellängsachsen der Leitungsabschnitte verlaufen insbesondere jeweils durch die Flächenschwerpunkte der jeweiligen Strömungsquerschnitte.

Eine günstige Drosselwirkung kann weiterhin dadurch erzielt werden, dass der Leitungsabschnitt zumindest einer Stufe mit seiner Mittellängsachse gegenüber der Mittellängsachse des Leitungsabschnitts einer anderen Stufe und/oder der Mittellängsachse der Kraftstoffleitung stromab des Drosselelements in einem Winkel geneigt angeordnet ist. Der Winkel kann konstant (resultierend in einer konstanten Steigung) oder veränderlich (resultierend in einer Krümmung) ausgebildet sein. Der Winkel beträgt vorzugsweise 45° oder weiniger, z. B. 30° oder weniger.

Dabei können zweckmäßigerweise mehrere (insbesondere unmittelbar) hintereinander angeordnete Leitungsabschnitte, mehrerer Stufen, mit ihren Mittellängsachsen gegenüber der Mittellängsachse der Kraftstoffleitung stromab des Drosselelements in dem Winkel geneigt angeordnet sein, wobei die Neigungen, insbesondere in ihren Ausrichtungen bzgl. der Umlaufrichtung, jeweils alternieren. Z. B. können die Neigungen den gleichen, insbesondere konstanten, Winkel aufweisen und/oder die Mittellängsachsen aufeinanderfolgender Stufen in eine andere Richtung bzgl. der Umlaufrichtung weisen, z. B. um zwischen 90° und 270°, z. B. um im Wesentlichen 180°, versetzt zueinander.

In einer fertigungstechnisch vorteilhaften Ausbildungsvariante umfasst das Drosselelement einen insbesondere zylindrischen, z. B. monolithischen, Hohlkörper oder ist als solcher ausgebildet, welcher unter fluiddichter Abdichtung an oder in dem Düsenhalter befestigt ist. Vorzugsweise umfasst der Hohlkörper dabei zumindest Teile eines Befestigungsmittels und/oder einer Befestigungsstruktur, z. B. ein Gewinde für eine Schraubverbildung. Auf diese Weise kann das Drosselelement vorteilhafterweise unabhängig von der Düsenvorrichtung, insbesondere dem Düsenhalter, separat gefertigt und anschließend montiert werden. Ein monolithischer Hohlkörper, der das gesamte Drosselelement umfasst, kann insbesondere mittels eines additiven Fertigungsverfahrens (3D-Druck) gefertigt werden.

In einer fertigungs- und montagetechnisch vorteilhaften Ausbildungsvariante umfasst das Drosselelement zumindest zwei Einzelelemente oder ist daraus gebildet, wobei insbesondere jeweils ein Einzelelement zumindest den Leitungsabschnitt einer Stufe aufweist. Vorzugsweise umfassen die Einzelelemente Leitungsabschnitte und/oder Entspannungskammern in Zuordnung derart, dass eine konventionelle Fertigung des Drosselelements bzw. der Einzelelemente, ohne additives Fertigungsverfahren, z. B. mittels eines Fertigungsverfahrens der Zerspantechnik wie Drehen und/oder Bohren, erfolgen kann. Bei Einbau werden die Einzelelemente vorzugsweise fluiddicht gegeneinander und/oder gegen die übrige Düsenvorrichtung abgedichtet. Diese Ausbildungsvariante bringt auch Vorteile hinsichtlich Austauschbarkeit, z. B. bei Auslegung des Drosselelements auf einem Prüfstand, wobei die Einzelelemente erforderlichenfalls einzeln ausgetauscht werden können.

In einer Ausbildungsvariante können bei Vorhandensein mehrerer Entspannungskammern deren Strömungsquerschnitte, insbesondere deren Durchmesser, gleich groß (und deckungsgleich) ausgebildet sein.

Insbesondere in diesem Zusammenhang können die Strömungsquerschnitte, insbesondere die Durchmesser, der Entspannungskammern dem Strömungsquerschnitt, insbesondere dem Durchmesser, der stromab des Drosselelements angeordneten Kraftstoffleitung (in Form und/oder Größe) entsprechen.

Nachfolgend wird die Erfindung anhand von Ausführungsbeispielen unter Bezugnahme auf die Zeichnungen näher erläutert. Es zeigen:
- Fig. 1: eine Düsenvorrichtung mit einem Drosselelement zur Drosselung eines Kraftstoffflusses auf eine vorgegebene Sollmenge gemäß dem Stand der Technik in schematischer Darstellung im Längsschnitt,
- Fig. 2: eine vorgeschlagene Düsenvorrichtung mit dem Drosselelement umfassend drei Stufen, die in Strömungsrichtung aufeinanderfolgend einen kleineren Durchmesser ausweisen, in schematischer Darstellung im Längsschnitt,
- Fig. 3: eine weitere Ausbildungsvariante der vorgeschlagenen Düsenvorrichtung mit dem Drosselelement umfassend drei Stufen mit gleichem Durchmesser in schematischer Darstellung im Längsschnitt,
- Fig. 4: eine weitere Ausbildungsvariante der vorgeschlagenen Düsenvorrichtung mit dem Drosselelement umfassend zwei Stufen, die in Strömungsrichtung aufeinanderfolgend einen kleineren Durchmesser ausweisen, in schematischer Darstellung im Längsschnitt,
- Fig. 5: eine weitere Ausbildungsvariante der vorgeschlagenen Düsenvorrichtung mit dem Drosselelement umfassend drei Einzelelemente und drei Stufen in schematischer Darstellung im Längsschnitt,
- Fig. 6: eine weitere Ausbildungsvariante der vorgeschlagenen Düsenvorrichtung mit dem Drosselelement umfassend drei Stufen mit radial versetzten Leitungsabschnitten in schematischer Darstellung im Längsschnitt,
- Fig. 7: eine weitere Ausbildungsvariante der vorgeschlagenen Düsenvorrichtung mit dem Drosselelement umfassend drei Stufen mit geneigten Leitungsabschnitten in schematischer Darstellung im Längsschnitt und
- Fig. 8A, B, C: jeweils beispielhafte Formen von Strömungsquerschnitten zweier insbesondere aufeinanderfolgender Leitungsabschnitte in schematischer Darstellung in Draufsicht.

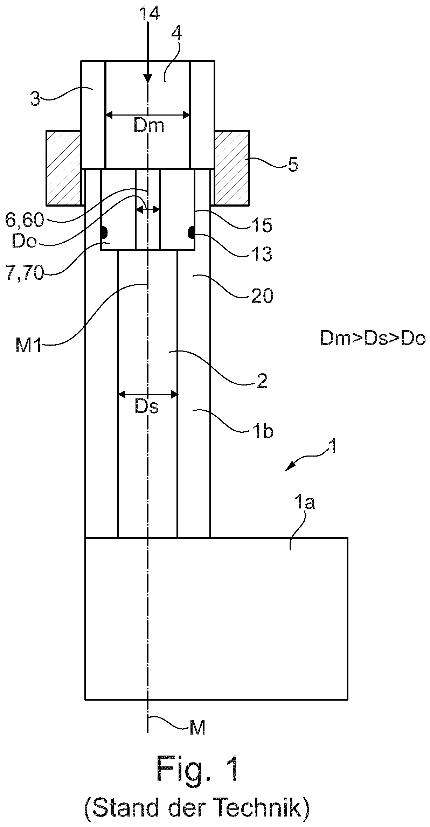

Fig. 1 zeigt in einer schematischen Darstellung im Längsschnitt eine Düsenvorrichtung 1 zur Zugabe von Kraftstoff 14 in eine Brennkammer einer Gasturbinenanordnung, insbesondere des Triebwerks eines Luftfahrzeugs. Die Düsenvorrichtung 1 weist einen in Fig. 1 angedeuteten Düsenhauptkörper 1a auf, über den im Betrieb Kraftstoff 14 mittels Düsenöffnungen (in Fig. 1 nicht gezeigt) in die Brennkammer eingespritzt wird.

Die in Fig. 1 gezeigte Düsenvorrichtung 1 ist insbesondere zur Zugabe von flüssigen Brennstoffen, z. B. Kerosin ausgebildet.

Weiterhin weist die Düsenvorrichtung 1 einen Düsenhalter 1b mit hier beispielhaft einer Kraftstoffleitung 2 auf. Die Kraftstoffleitung 2 bildet im eingebauten Zustand eine Strömungsverbindung zwischen einem Anschluss 4 eines Kraftstoffverteilers (Kraftstoff-Manifold), mit einer Kraftstoffzuleitung 3, und dem Düsenhauptkörper 1a. Die Kraftstoffleitung 2 ist zumindest abschnittsweise entlang einer Mittellängsachse M ausgerichtet, wobei die Mittellängsachse M die Symmetrieachse bildet. Die Kraftstoffleitung 2 weist zumindest in einem stromab eines Drosselelements 7 angeordneten Abschnitt insbesondere einen kreisförmigen Strömungsquerschnitt mit einem Durchmesser Ds auf, der von einer Wandung 20 der Kraftstoffleitung 2 umgrenzt ist.

Fig. 1 zeigt den Anschluss 4 mit der Kraftstoffzuleitung 3. Die Kraftstoffzuleitung 3 weist zumindest unmittelbar stromauf der Kraftstoffleitung 2 insbesondere einen kreisförmigen Strömungsquerschnitt mit einem Durchmesser Dm auf, wobei der Strömungsquerschnitt der Kraftstoffzuleitung 3 größer ist als der Strömungsquerschnitt der Kraftstoffleitung 2. Bei der vorzugsweise kreisförmigen Ausbildung des Strömungsquerschnitts gilt somit Dm > Ds.

Die Kraftstoffzuleitung 3 und der Düsenhalter 1b sind mit einer Verbindungsanordnung 5 fluiddicht miteinander verbunden. Die Verbindungsanordnung 5 kann z. B. als Schraubverbindung mit einer Mutter und einem korrespondierenden Gewinde ausgebildet sein.

Am stromaufseitigen (eintrittsseitigen) Ende der Kraftstoffleitung 2 ist das Drosselelement 7 angeordnet, welches im Betrieb den aus der Kraftstoffzuleitung 3 in die Düsenvorrichtung 1 einströmenden Kraftstofffluss (Mengenstrom) auf eine vorgegebene, zum Betrieb der Brennkammer erforderliche, Sollmenge drosselt.

Das Drosselelement 7 ist vorliegend beispielhaft als zylindrischer Hohlkörper 70 ausgebildet, der in eine korrespondierende zylindrische Aussparung 15 in der Wandung 20 insbesondere formschlüssig eingesetzt ist. Möglich wäre auch eine andere Ausbildung, z. B. mit Anordnung zwischen dem Anschluss 4 und dem Düsenhalter 1b.

Zur fluiddichten Abdichtung ist an der Außenseite des Ringkörpers 70 als Dichtmittel beispielhaft eine umlaufende Ringdichtung 13 vorhanden. Das stromaufseitige Ende des Hohlkörpers 70 schließt insbesondere mit dem stromaufseitigen Ende der Wandung 20 im Wesentlichen flächig ab. Zur axialen Fixierung überlappt eine Wandung der Kraftstoffzuleitung 3 radial mit dem Hohlkörper 70.

Der Hohlkörper 70 umfasst einen innerhalb des Drosselelements 7 angeordneten Leitungsabschnitt 6 der Kraftstoffleitung 2, der insbesondere durch eine zentrale, längs ausgerichtete zylindrische Bohrung 60, in Längsrichtung durch den Hohlkörper 70, gebildet ist. Die Bohrung 6 ist mit einer Mittellängsachse M1 koaxial zu dem stromab des Drosselelements 7 angeordneten Abschnitt der Kraftstoffleitung 2 angeordnet, wobei die Mittellängsachse M1 auf der Mittelachse M liegt.

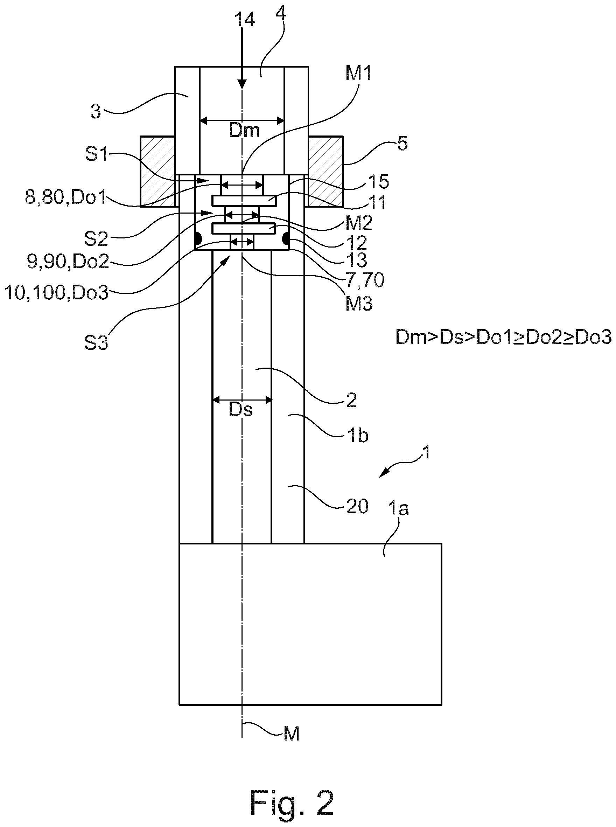

Der Leitungsabschnitt 6 des Drosselelements 7 weist einen geringeren Strömungsquerschnitt auf als der stromab des Drosselelements 7 angeordnete Abschnitt der Kraftstoffleitung 2. Der Strömungsquerschnitt ist vorzugsweise kreisförmig ausgebildet und weist einen Durchmesser Do auf. Bei der vorzugsweise kreisförmigen Ausbildung auch der übrigen Strömungsquerschnitte gilt somit Dm > Ds > Do. Dabei sind beispielhaft die Durchmesser der Strömungsquerschnitte zueinander in Bezug gesetzt. Bei nicht kreisförmiger Ausbildung der Strömungsquerschnitte gelten die relativen Beziehungen der betreffenden Abschnitte (auch bzgl. der Ausführungsbeispiele gemäß Fig. 2 bis Fig. 8) allgemein für die betreffenden Strömungsquerschnitte.

Im Betrieb strömt Kraftstoff 14 über den Anschluss 4 in die Düsenvorrichtung 1 ein. Dabei passiert der Kraftstoffstrom zunächst das Drosselelement 7, in welchem aufgrund der Reduktion des Strömungsquerschnitts ein Druckabfall resultierend in einem Strömungswiderstand derart generiert wird, dass die Sollmenge an Kraftstoff 14 durch die Kraftstoffleitung 2 dem Düsenhauptkörper 1a zugeführt wird.

Bei Kraftstoffen mit geringer Dichte (gasförmige Kraftstoffe wie Methan und/oder Wasserstoff) können zur Einstellung des erforderlichen Druckabfalls nachteilhafterweise hohe Geschwindigkeiten, von mehreren hundert Metern pro Sekunde, auftreten.

Um dies zu vermeiden, wird für Kraftstoffe mit geringer Dichte, insbesondere Wasserstoff, eine Düsenvorrichtung 1 mit einem modifizierten Drosselelement 7 vorgeschlagen. Eine Ausführungsvariante des modifizierten Drosselelements 7 ist in Fig. 2 gezeigt.

Das in Fig. 2 gezeigte Drosselelement 7 weist zumindest zwei, in Fig. 2 beispielhaft drei strömungstechnisch in Reihe angeordnete Stufen S1, S2, S3 auf. Jede Stufe S1, S2, S3 weist einen entlang einer jeweiligen Mittellängsachse M1, M2, M3 ausgerichteten Leitungsabschnitt 8, 9, 10 der Kraftstoffleitung 2 mit einem jeweiligen, insbesondere konstanten, Strömungsquerschnitt auf. Die Leitungsabschnitte 8, 9, 10 sind beispielsweise jeweils durch eine, insbesondere zylindrische, Bohrung 80, 90, 100 gebildet. Die Strömungsquerschnitte sind jeweils vorzugsweise kreisförmig, mit Durchmessern Do1, Do2, Do3, ausgebildet.

Zwischen der ersten Stufe S1 und der zweiten, in Strömungsrichtung (unmittelbar, ohne Zwischenordnung einer weiteren Stufe) nachfolgenden Stufe S2 ist eine Entspannungskammer 11 angeordnet. Zwischen der zweiten Stufe S2 und der dritten, in Strömungsrichtung (unmittelbar, ohne Zwischenordnung einer weiteren Stufe) nachfolgenden Stufe S3 ist eine Entspannungskammer 12 angeordnet. Die Entspannungskammern 11, 12 weisen jeweils einen größeren Strömungsquerschnitt auf als die jeweils unmittelbar stromauf angeordnete Stufe S1, S2. Beispielhaft entsprechen die Strömungsquerschnitte der Entspannungskammern 11, 12 einander und/oder zumindest im Wesentlichen dem Strömungsquerschnitt des Abschnitts der Kraftstoffleitung 2 stromab des Drosselelements 7, wobei ihr Durchmesser etwa gleich dem Durchmesser Ds beträgt.

Die axiale Erstreckung der Entspannungskammern 11, 12 ist vorliegend beispielhaft geringer als die axiale Erstreckung der Leitungsabschnitte 8, 9, 10, derart, dass eine Entspannungswirkung erzielt wird, jedoch, für eine möglichst kompakte Ausbildung des Drosselelements 7, möglichst gering.

Die axiale Erstreckung der Leitungsabschnitte 8, 9, 10 der einzelnen Stufen S1, S2, S3 ist vorliegend beispielhaft zumindest im Wesentlichen gleich ausgebildet. Die axiale Erstreckung beträgt beispielsweise weniger als der Durchmesser Ds, insbesondere weniger als die Hälfte des Durchmessers Ds.

Das Drosselelement 7, das die Stufen S1, S2, S3 und die Entspannungskammern 11, 12 umfasst, ist in Fig. 2 beispielhaft aus einem Stück, monolithisch, gefertigt. Die Herstellung kann beispielsweise mittels eines additiven Fertigungsverfahrens (3D-Druck) erfolgen.

Die Leitungsabschnitte 8, 9, 10 sind in Fig. 2 beispielhaft koaxial zu dem Abschnitt der Kraftstoffleitung 2 stromab des Drosselelements 7 angeordnet, wobei ihre jeweilige Mittellängsachse M1, M2, M3 auf der Mittellängsachse M liegt.

In Fig. 2 weisen beispielhaft die jeweils stromab angeordneten Stufen S2, S3 einen kleineren Strömungsquerschnitt auf als die jeweils unmittelbar stromauf dazu angeordneten Stufen S1, S2. So ergibt sich eine stufenweise Verkleinerung des Strömungsquerschnitts innerhalb der Kraftstoffleitung 2 über die Stufenanordnung innerhalb des Drosselelements 7. Insbesondere weist die am weitesten stromauf angeordnete, erste, Stufe S1 den größten Strömungsquerschnitt, mit dem größten Durchmesser Do1, auf. Die nachfolgende, zweite, Stufe S2 weist einen kleineren Strömungsquerschnitt, mit dem kleineren Durchmesser Do2, auf. Die nachfolgende, dritte, Stufe S3 weist den kleinsten Strömungsquerschnitt, mit dem kleinsten Durchmesser Do3 auf. Zusammenfassend ergibt sich mithin bei der in Fig. 2 gezeigten Ausbildungsvariante der Düsenvorrichtung 1 ein Verhältnis der Durchmesser der einzelnen Leitungen relativ zueinander gemäß der Vorschrift Dm > Ds > Do1 > Do2 > Do3. In allgemeiner Form mit n Stufen gilt, für n ≥ 2: Dm > Ds > Do1 > ... > Don.

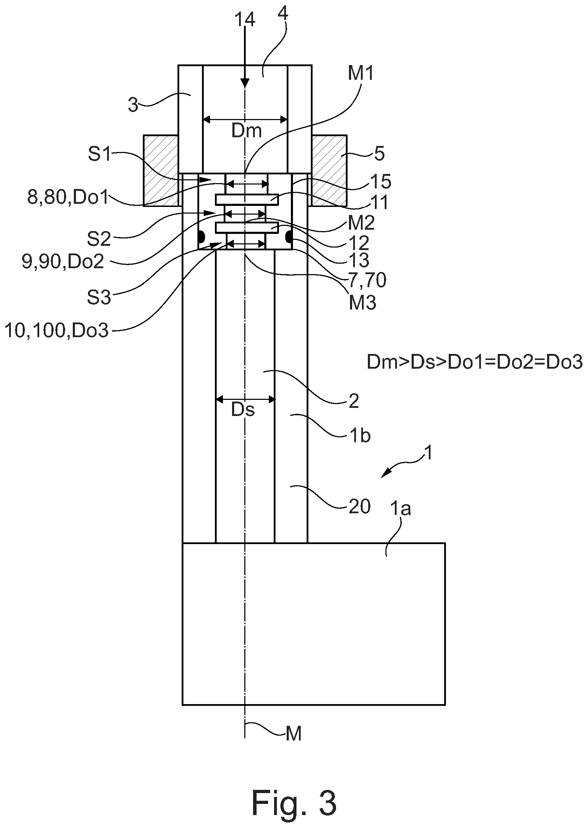

Fig. 3 zeigt eine weitere Ausbildungsvariante der Düsenvorrichtung 1 mit einem Drosselelement 7 umfassend drei Stufen S1, S2, S3. Gegenüber der in Fig. 2 gezeigten Ausbildungsvariante unterscheidet sich die Drosselvorrichtung 7 gemäß Fig. 3 dahingehend, dass alle Stufen S1, S2, S3 den gleichen Strömungsquerschnitt, insbesondere die gleichen Durchmesser Do1, Do2, Do3 aufweisen. Auch hierbei sind zwischen den Stufen S1, S2 sowie S2, S3 Entspannungskammern 11, 12 angeordnet.

Zusammenfassend ergibt sich mithin bei der in Fig. 3 gezeigten Ausbildungsvariante der Düsenvorrichtung 1 ein Verhältnis der Durchmesser der einzelnen Leitungen von Dm > Ds > Do1 = Do2 = Do3. In allgemeiner Form mit n Stufen gilt, für n ≥ 2: Dm > Ds > Do1 = ... = Don.

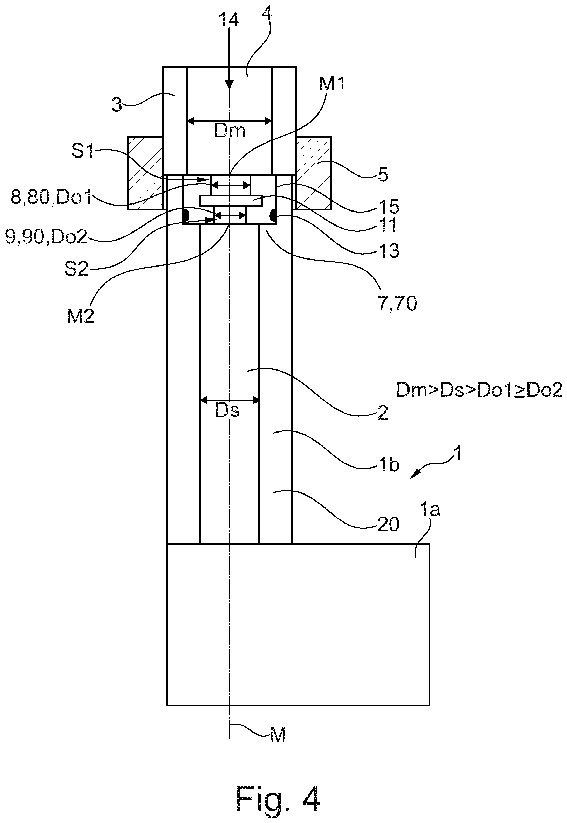

Fig. 4 zeigt eine weitere Ausbildungsvariante der Düsenvorrichtung 1 mit einem Drosselelement 7 umfassend hier beispielhaft zwei Stufen S1, S2. Zwischen den beiden Stufen S1, S2 ist die Entspannungskammer 11 angeordnet. In der übrigen Ausbildung (Anordnung der Leitungsabschnitte 8, 9, axiale Erstreckung der Leitungsabschnitte 8, 9 und der Entspannungskammer 11) entspricht Fig. 4, abgesehen von der 2-stufigen Ausbildung, der in Fig. 2 gezeigten Ausbildungsvariante, wobei der Strömungsquerschnitt der ersten Stufe S1 kleiner ist als der Strömungsquerschnitt der zweiten Stufe S2, sodass gilt: Dm > Ds > Do1 > Do2. Möglich wäre auch bei der 2-stufigen Ausbildung eine Ausbildung der Stufen S1, S2 gemäß der Vorschrift Dm > Ds > Do1 = Do2.

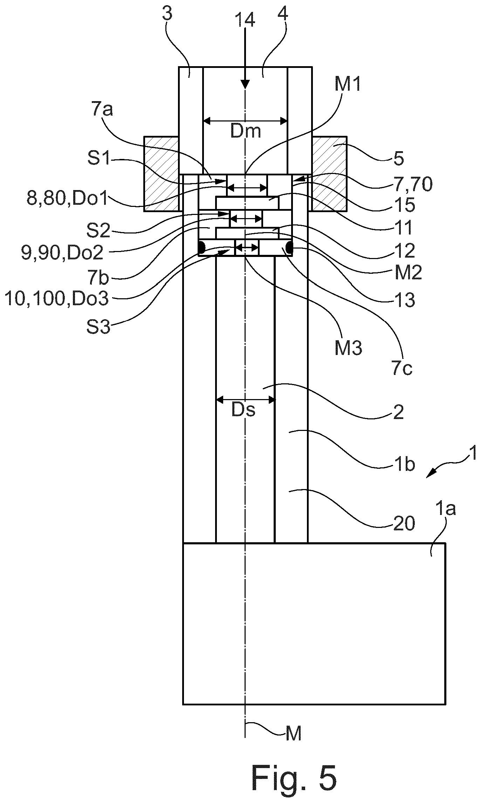

Fig. 5 zeigt eine Ausbildungsvariante der Düsenvorrichtung 1 mit einem Drosselelement 7, das bezüglich der Ausbildung und Anordnung der Leitungsabschnitte 8, 9, 10 und der Entspannungskammern 11, 12 beispielhaft der in Fig. 2 gezeigten Ausbildungsvariante entspricht. Insbesondere sind die Durchmesser der einzelnen Leitungen gemäß der Vorschrift Dm > Ds > Do1 > Do2 > Do3 ausgelegt.

Im Unterschied zu der in Fig. 2 gezeigten Ausbildungsvariante weist das Drosselelement 7 mehrere Einzelelemente 7a, 7b, 7c auf, bzw. ist vorliegend aus den Einzelelementen 7a, 7b, 7c gebildet. Die Einzelelemente 7a, 7b, 7c sind jeweils aus zylindrischen Hohlkörpern gebildet, die zusammengesetzt den Hohlkörper 70 bilden. Vorzugsweise weist jedes Einzelelement 7a, 7b, 7c den Leitungsabschnitt 8, 9, 10 einer Stufe S1, S2, S3 auf. Die Entspannungskammer 11 ist beispielhaft dem Einzelelement 7a, mit der Stufe S1, zugeordnet. Die Entspannungskammer 12 ist beispielhaft dem Einzelelement 7b, mit der Stufe S2, zugeordnet. Eine derartige Ausbildung des Drosselelements 7 bewirkt insbesondere Vorteile bei der Herstellung und/oder des Einbaus des Drosselelements 7 und/oder erlaubt eine einfache Modifikation des Drosselelements 7 z. B. während einer Auslegung der Düsenvorrichtung 1 bzw. des Drosselelements 7 im Prüfstandsbetrieb.

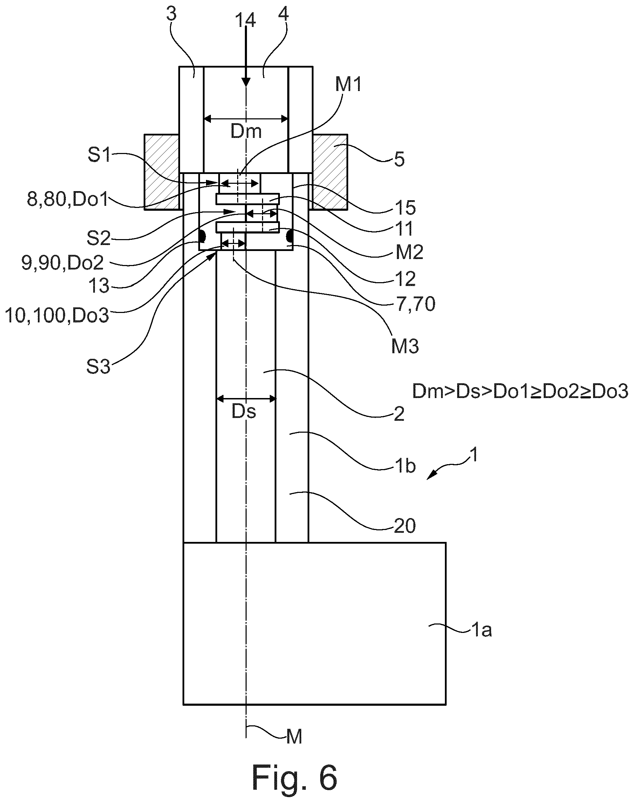

Fig. 6 zeigt eine weitere Ausbildungsvariante der Düsenvorrichtung 1 mit einem Drosselelement 7 umfassend beispielhaft die drei Stufen S1, S2, S3. In Anlehnung an das Ausführungsbeispiel gemäß Fig. 2 sind die Stufen S1, S2, S3 bezüglich ihrer Strömungsquerschnitte beispielhaft gemäß der Vorschrift Dm > Ds > Do1 > Do2 > Do3 ausgelegt.

Im Unterschied zu dem in Fig. 2 gezeigten Ausführungsbeispiel sind in Fig. 6 die Leitungsabschnitte 8, 9, 10 mit ihren jeweiligen Mittellängsachsen M1, M2, M3 radial versetzt zu der Mittellängsachse M angeordnet. Der Versatz der Mittellängsachsen M1, M2, M3 ist jeweils für die (unmittelbar) aufeinanderfolgenden Stufen S1, S2, S3 unterschiedlich, vorliegend beispielhaft jeweils abwechselnd zu den beiden radial gegenüberliegenden Seiten der Mittellängsachse M (in Umlaufrichtung um z. B. etwa 180°) versetzt. Die Entspannungskammern 11, 12 sind insbesondere koaxial zu der Mittellängsachse M angeordnet.

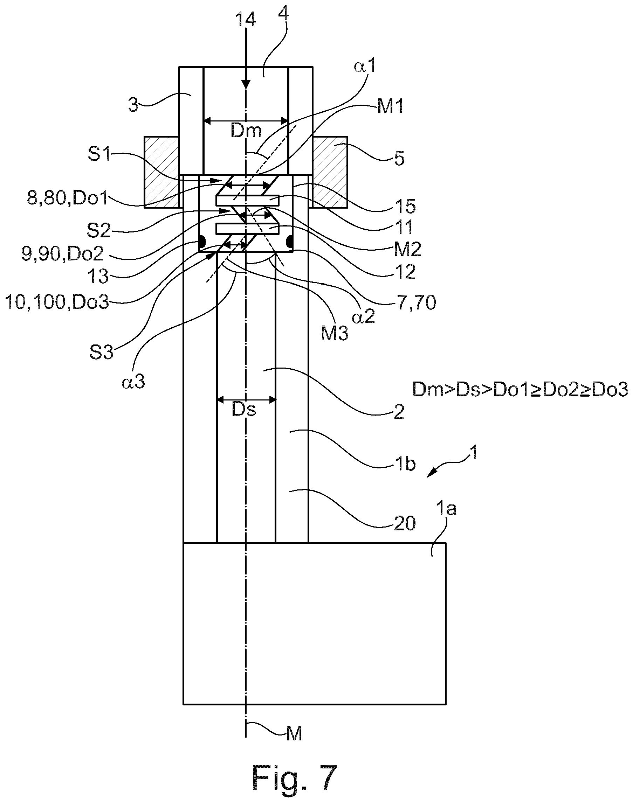

Fig. 7 zeigt eine weitere Ausbildungsvariante der Düsenvorrichtung 1 mit einem Drosselelement 7 umfassend beispielhaft die drei Stufen S1, S2, S3. In Anlehnung an das Ausführungsbeispiel gemäß Fig. 2 sind die Stufen S1, S2, S3 bezüglich ihrer Strömungsquerschnitte beispielhaft gemäß der Vorschrift Dm > Ds > Do1 > Do2 > Do3 ausgelegt.

Im Unterschied zu dem in Fig. 2 gezeigten Ausführungsbeispiel sind in Fig. 7 die Leitungsabschnitte 8, 9, 10 mit ihren jeweiligen Mittellängsachsen M1, M2, M3 gegenüber der Mittellängsachse M in jeweils einem beispielhaft konstanten Winkel α1, α2, α3 geneigt angeordnet. Die Neigungen betragen jeweils vorzugsweise weniger als 45°, z. B. weniger als 30° gegenüber der Mittellängsachse M. Die Neigungen der Mittellängsachsen M1, M2, M3 alternieren jeweils für die (unmittelbar) aufeinanderfolgenden Stufen S1, S2, S3 in ihren Ausrichtungen bzgl. der Umlaufrichtung. Vorliegend liegen die Mittellängsachsen M1, M2, M3 beispielhaft in einer gemeinsamen Ebene, sind jedoch auf gegenüberliegende Seiten bezüglich der Mittellängsachse M geneigt bzw. ausgerichtet, d. h. mit einem Versatz in Umlaufrichtung um 180°. Die Winkel α1, α2, α3 weisen beispielhaft den gleichen Betrag auf.

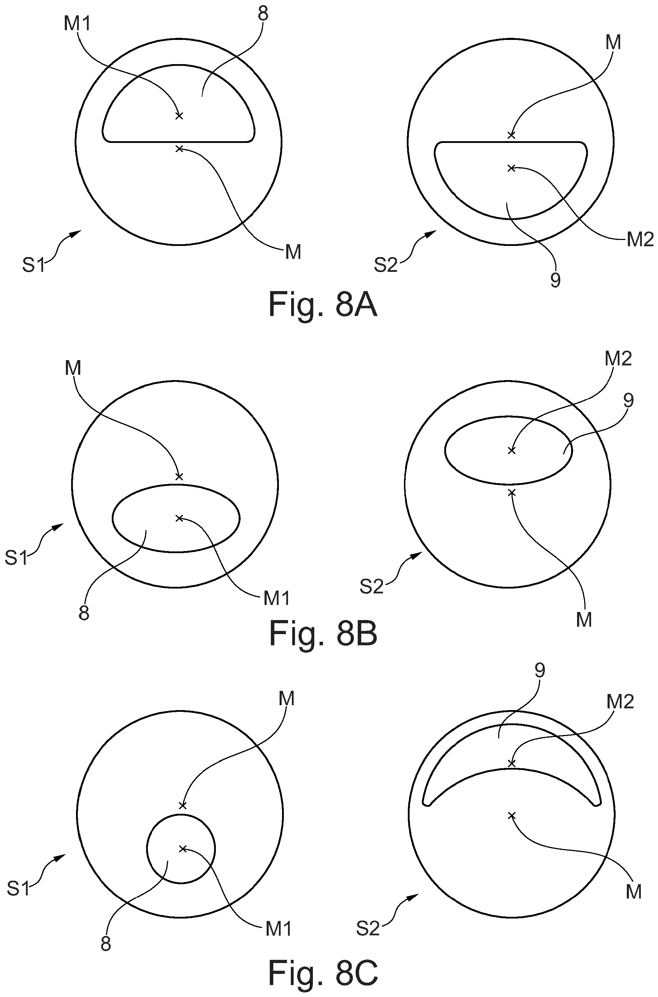

Fig. 8A, Fig. 8B und Fig. 8C zeigen in Ergänzung zu Fig. 6 in Draufsicht auf die Leitungsabschnitte 8, 9 der jeweiligen Stufe S1, S2, jeweils beispielhafte Formen und Anordnungen, die versetzte Strömungsquerschnitte zweiter insbesondere aufeinanderfolgender Leitungsabschnitte 8, 9 aufweisen können. Dabei ist jeweils der Versatz derart ausgebildet, dass die Strömungsquerschnitte der Leitungsabschnitte 8, 9 der beiden aufeinanderfolgenden Stufen S1, S2 bezüglich ihrer radialen Position und/oder Position in Umlaufrichtung hier beispielhaft nicht überlappen, d. h. die Strömungsquerschnitte weisen, in axialer Richtung hintereinander geordnet, unterschiedliche radialen Positionen und Positionen in Umlaufrichtung auf. In axialer Richtung betrachtet, wird so eine geometrische Überschneidung aufeinanderfolgender Strömungsquerschnitte vermieden. Dies verhindert, dass einzelne Stromfäden axial durch das Drosselelement 7 ohne Ablenkung durchschießen und somit die Drosselwirkung herabsetzen.

In Fig. 8A sind die Strömungsquerschnitte beispielhaft halbkreisförmig und kongruent zueinander ausgebildet. In Fig. 8B sind die Strömungsquerschnitte beispielhaft elliptisch und kongruent zueinander ausgebildet. In Fig. 8C sind die Strömungsquerschnitte beispielhaft unterschiedlich ausgebildet, wobei ein Strömungsquerschnitt kreisförmig und ein Strömungsquerschnitt sichelförmig ausgeführt ist.

Die einzelnen Merkmale der Ausführungsbeispiele gemäß Fig. 2 bis Fig. 8 sind selbstverständlich auf unterschiedliche Arten miteinander kombinierbar.

Zusammenfassend kann durch die Ausbildung und/oder Anordnung der Stufen S1, S2, und ggf. S3, insbesondere der Leitungsabschnitte 8, 9, und ggf. 10, in den in Fig. 2 bis Fig. 7 gezeigten Ausführungsbeispielen des Drosselelements 7 ein vermehrter Druckabfall pro Länge des Drosselelements 7 erreicht werden, ohne den Durchmesser der Leitungsabschnitte 8, 9, und ggf. 10 derart zu reduzieren, dass es bei dem Einsatz gasförmiger Kraftstoffe, insbesondere Wasserstoff, zu übermäßig hohen Geschwindigkeiten kommt. Mit den unterschiedlichen Ausbildungsvarianten der Düsenvorrichtung 1, insbesondere des Drosselelements 7, kann Einfluss auf das Strömungsbild insbesondere innerhalb der Drosselvorrichtung 7 genommen werden. So kann mit der vorgeschlagenen Düsenvorrichtung 1 eine Gasturbinenanordnung insbesondere hinsichtlich des Betriebs mit Wasserstoff optimiert werden.

### Bezugszeichenliste

- 1: Düsenvorrichtung
- 1a: Düsenhauptkörper
- 1b: Düsenhalter
- 2: Kraftstoffleitung
- 20: Wandung
- 3: Kraftstoffzuleitung
- 4: Anschluss
- 5: Verbindungsmittel
- 6: Leitungsabschnitt
- 60: Bohrung
- 7: Drosselelement
- 70: Hohlkörper
- 7a: Einzelelement
- 7b: Einzelelement
- 7c: Einzelelement
- 8: Leitungsabschnitt
- 80: Bohrung
- 9: Leitungsabschnitt
- 90: Bohrung
- 10: Leitungsabschnitt
- 100: Bohrung
- 11: Entspannungskammer
- 12: Entspannungskammer
- 13: Ringdichtung
- 14: Kraftstoff
- 15: Aussparung
- Dm: Durchmesser Verteiler-Kraftstoffleitung
- Ds: Durchmesser Kraftstoffleitung
- Do: Durchmesser Leitungsabschnitt
- Do1: Durchmesser Leitungsabschnitt
- Do2: Durchmesser Leitungsabschnitt
- Do3: Durchmesser Leitungsabschnitt
- M: Mittellängsachse
- M1: Mittellängsachse
- M2: Mittellängsachse
- M3: Mittellängsachse
- S1: Stufe
- S2: Stufe
- S3: Stufe
- α1: Winkel
- α2: Winkel
- α3: Winkel

## Patentansprüche

1. Düsenvorrichtung (1) zur Zugabe von gasförmigem Kraftstoff (14) in eine Brennkammer einer Gasturbinenanordnung umfassend
- einen Düsenhauptkörper (1a) mit Düsenöffnungen zur Einspritzung des Kraftstoffes in die Brennkammer, und
- einen Düsenhalter (1b) mit zumindest einer Kraftstoffleitung (2) zur Strömungsverbindung zwischen einer Verteiler-Kraftstoffleitung (4) eines Kraftstoff-Verteilers (3) und dem Düsenhauptkörper (1a), wobei die Kraftstoffleitung (2) zumindest abschnittsweise entlang, und insbesondere symmetrisch zu, einer Mittellängsachse (M) ausgerichtet ist und mit einem stromab der Verteiler-Kraftstoffleitung (4), insbesondere am stromaufseitigen Ende der Kraftstoffleitung (2), angeordneten Drosselelement (7) zur Drosselung des Kraftstoffflusses auf eine vorgegebene Sollmenge, wobei
- das Drosselelement (7) zumindest zwei strömungstechnisch in Reihe angeordnete Stufen (S1, S2, S3) umfasst, wobei jede Stufe (S1, S2, S3) zumindest einen entlang einer Mittellängsachse (M1, M2, M3) ausgerichteten Leitungsabschnitt (8, 9, 10) mit einem Strömungsquerschnitt aufweist,
wobei zwischen den Stufen (S1, S2, S3) jeweils eine Entspannungskammer (11, 12) angeordnet ist, deren Strömungsquerschnitt größer ist als der Strömungsquerschnitt der stromauf dazu angeordneten Stufe (S1, S2),
**dadurch gekennzeichnet, dass**
- eine axiale Erstreckung der Leitungsabschnitte (8, 9, 10) weniger als ein Durchmesser (Ds) der Kraftstoffleitung (2) stromab des Drosselelements (7) beträgt, und
- der Leitungsabschnitt (8, 9, 10) zumindest einer Stufe (S1, S2, S3) mit seiner Mittellängsachse (M1, M2, M3) radial versetzt zu der Mittellängsachse (M1, M2, M3) zumindest einer anderen Stufe (S1, S2, S3) und/oder zu der Mittellängsachse (M) der Kraftstoffleitung (2) stromab des Drosselelements angeordnet ist.

2. Düsenvorrichtung (1) nach Anspruch 1,
**dadurch gekennzeichnet,**
**dass** zumindest einer der Leitungsabschnitte (8, 9, 10) innerhalb des Drosselelements (7) einen geringeren Strömungsquerschnitt aufweist als die Verteiler-Kraftstoffleitung (4) und/oder die Kraftstoffleitung (2) stromab des Drosselelements.

3. Düsenvorrichtung (1) nach Anspruch 1 oder 2,
**dadurch gekennzeichnet,**
**dass** die am weitesten stromauf angeordnete, erste, Stufe (S1) den größten Strömungsquerschnitt der vorhandenen Stufen (S1, S2, S3) aufweist.

4. Düsenvorrichtung (1) nach einem der vorhergehenden Ansprüche,
**dadurch gekennzeichnet,**
**dass** die strömungstechnisch stromab einer Stufe (S1, S2) angeordneten Stufen (S1, S2, S3) jeweils einen gleichen oder kleineren Strömungsquerschnitt aufweisen als die jeweils stromauf angeordnete Stufe (S1, S2).

5. Düsenvorrichtung (1) nach einem der vorhergehenden Ansprüche,
**dadurch gekennzeichnet,**
**dass** die Leitungsabschnitte (8, 9, 10) zumindest teilweise koaxial zueinander angeordnet sind.

6. Düsenvorrichtung (1) nach einem der vorhergehenden Ansprüche,
**dadurch gekennzeichnet,**
**dass** der Versatz zumindest zweier Leitungsabschnitte (8, 9, 10), vorzugsweise zweier aufeinanderfolgender Stufen (S1, S2, S3), radial und/oder in Umlaufrichtung unterschiedlich ausgebildet ist, wobei z. B. zumindest zwei aufeinanderfolgende Stufen (S1, S2, S3) in Umlaufrichtung, ggf. jeweils, um zwischen 90° und 270°, z. B. um im Wesentlichen 180°, versetzt zueinander angeordnet sind.

7. Düsenvorrichtung (1) nach Anspruch 6,
**dadurch gekennzeichnet,**
**dass** der Versatz derart ausgebildet ist, dass die Strömungsquerschnitte der Leitungsabschnitte (8, 9, 10) zumindest zweier aufeinanderfolgender Stufen (S1, S2, S3) bezüglich ihrer radialen Position und/oder Position in Umlaufrichtung wenig, z. B. maximal um 20% des Strömungsquerschnitts, oder nicht überlappen.

8. Düsenvorrichtung (1) nach einem der vorhergehenden Ansprüche,
**dadurch gekennzeichnet,**
**dass** der Leitungsabschnitt (8, 9, 10) zumindest einer der Stufen (S1, S2, S3) mit seiner Mittellängsachse (M1, M2, M3) gegenüber der Mittellängsachse (M1, M2, M3) des Leitungsabschnitts (8, 9, 10) einer anderen Stufe (S1, S2, S3) und/oder der Mittellängsachse (M) der Kraftstoffleitung (2) stromab des Drosselelements (7) in einem Winkel (α1, α2, α3) geneigt angeordnet ist.

9. Düsenvorrichtung (1) nach Anspruch 8,
**dadurch gekennzeichnet,**
**dass** mehrere hintereinander angeordnete Leitungsabschnitte (8, 9, 10), mehrerer Stufen (S1, S2, S3) mit ihren Mittellängsachsen (M1, M2, M3) gegenüber der Mittellängsachse (M) der Kraftstoffleitung (2) stromab des Drosselelements (7) in dem Winkel (α1, α2, α3) geneigt angeordnet sind, wobei die Neigungen, insbesondere in ihren Ausrichtungen bzgl. der Umlaufrichtung, jeweils alternieren.

10. Düsenvorrichtung (1) nach einem der vorhergehenden Ansprüche,
**dadurch gekennzeichnet,**
**dass** das Drosselelement (7) einen insbesondere zylindrischen, z. B. monolithischen, Hohlkörper (70) umfasst oder als solcher ausgebildet ist, welcher unter fluiddichter Abdichtung an oder in dem Düsenhalter (1b) befestigt ist.

11. Düsenvorrichtung (1) nach einem der vorhergehenden Ansprüche,
**dadurch gekennzeichnet,**
**dass** das Drosselelement (7), insbesondere der Hohlkörper (70), zumindest zwei Einzelelemente (7a, 7b, 7c) umfasst oder daraus gebildet ist, wobei insbesondere jeweils ein Einzelelement (7a, 7b, 7c) zumindest den Leitungsabschnitt (8, 9, 10) einer Stufe (S1, S2, S3) aufweist.

12. Düsenvorrichtung (1) nach einem der vorhergehenden Ansprüche,
**dadurch gekennzeichnet,**
**dass** bei Vorhandensein mehrerer Entspannungskammern (11, 12) deren Strömungsquerschnitte, insbesondere deren Durchmesser, gleich groß ausgebildet sind.

13. Düsenvorrichtung (1) nach Anspruch 12,
**dadurch gekennzeichnet,**
**dass** die Strömungsquerschnitte, insbesondere die Durchmesser, der Entspannungskammern (11, 12) dem Strömungsquerschnitt, insbesondere dem Durchmesser (Ds), der stromab des Drosselelements (7) angeordneten Kraftstoffleitung (2) entsprechen.

14. Gasturbinenanordnung mit einer Turbinenanordnung und mit zumindest einer Düsenvorrichtung (1) nach einem der vorhergehenden Ansprüche.

## Claims

1. Nozzle device (1) for adding gaseous fuel (14) to a combustor of a gas turbine assembly, comprising
- a nozzle main body (1a) with nozzle openings for injecting the fuel into the combustor, and
- a nozzle holder (1b) with at least one fuel line (2) for flow connection between a distributor fuel line (4) of a fuel distributor (3) and the nozzle main body (1a), wherein the fuel line (2) is aligned at least in sections along, and in particular symmetrically to, a central longitudinal axis (M), and with a throttle element (7) arranged downstream of the distributor fuel line (4), in particular at the upstream end of the fuel line (2), for throttling the fuel flow to a predetermined target amount, wherein
- the throttle element (7) comprises at least two stages (S1, S2, S3) arranged in series in terms of flow, wherein each stage (S1, S2, S3) has at least one line section (8, 9, 10) which is aligned along a central longitudinal axis (M1, M2, M3) and has a flow cross section,
wherein in each case, there is one expansion chamber (11, 12) arranged between the stages (S1, S2, S3), the flow cross section of which is greater than the flow cross section of the stage (S1, S2) arranged upstream thereof,
**characterized in that**
- an axial extent of the line sections (8, 9, 10) is less than a diameter (Ds) of the fuel line (2) downstream of the throttle element (7), and
- the line section (8, 9, 10) of at least one stage (S1, S2, S3) is arranged with its central longitudinal axis (M1, M2, M3) radially offset from the central longitudinal axis (M1, M2, M3) of at least one other stage (S1, S2, S3) and/or from the central longitudinal axis (M) of the fuel line (2) downstream of the throttle element.

2. Nozzle device (1) according to claim 1,
**characterized in that**
at least one of the line sections (8, 9, 10) within the throttle element (7) has a smaller flow cross section than the distributor fuel line (4) and/or the fuel line (2) downstream of the throttle element.

3. Nozzle device (1) according to claim 1 or 2,
**characterized in that**
the first stage (S1) arranged furthest upstream has the largest flow cross section of the existing stages (S1, S2, S3).

4. Nozzle device (1) according to one of the preceding claims,
**characterized in that**
the stages (S1, S2, S3) arranged downstream of a stage (S1, S2) in terms of flow in each case have an identical or smaller flow cross section than the respective stage (S1, S2) arranged upstream.

5. Nozzle device (1) according to one of the preceding claims,
**characterized in that**
the line sections (8, 9, 10) are arranged at least partially coaxially to one another.

6. Nozzle device (1) according to one of the preceding claims,
**characterized in that**
the offset of at least two line sections (8, 9, 10), preferably of two successive stages (S1, S2, S3), is configured differently radially and/or in the direction of rotation, wherein, for example, at least two successive stages (S1, S2, S3) are arranged offset from one another in the direction of rotation, optionally in each case, by between 90° and 270°, e.g. by substantially 180°.

7. Nozzle device (1) according to claim 6,
**characterized in that**
the offset is designed such that the flow cross sections of the line sections (8, 9, 10) of at least two successive stages (S1, S2, S3) overlap only slightly, e.g. by a maximum of 20% of the flow cross section, or do not overlap at all with respect to their radial position and/or position in the direction of rotation.

8. Nozzle device (1) according to one of the preceding claims,
**characterized in that**
the line section (8, 9, 10) of at least one of the stages (S1, S2, S3) is arranged with its central longitudinal axis (M1, M2, M3) inclined at an angle (α1, α2, α3) downstream of the throttle element (7) with respect to the central longitudinal axis (M1, M2, M3) of the line section (8, 9, 10) of another stage (S1, S2, S3) and/or the central longitudinal axis (M) of the fuel line (2).

9. Nozzle device (1) according to claim 8,
**characterized in that**
a plurality of line sections (8, 9, 10), arranged one behind the other, of a plurality of stages (S1, S2, S3) are arranged with their central longitudinal axes (M1, M2, M3) inclined at the angle (α1, α2, α3) with respect to the central longitudinal axis (M) of the fuel line (2) downstream of the throttle element (7), wherein the inclinations, in particular in their orientations with respect to the direction of rotation, alternate in each case.

10. Nozzle device (1) according to one of the preceding claims,
**characterized in that**
the throttle element (7) comprises or is formed as a hollow body (70) which is in particular cylindrical, for example monolithic, and is fastened to or in the nozzle holder (1b) in a fluid-tight manner.

11. Nozzle device (1) according to one of the preceding claims,
**characterized in that**
the throttle element (7), in particular the hollow body (70), comprises at least two individual elements (7a, 7b, 7c) or is formed therefrom, wherein in particular one individual element (7a, 7b, 7c) in each case has at least the line section (8, 9, 10) of a stage (S1, S2, S3).

12. Nozzle device (1) according to one of the preceding claims,
**characterized in that**
in the presence of a plurality of expansion chambers (11, 12), their flow cross-sections, in particular their diameters, are of the same size.

13. Nozzle device (1) according to claim 12,
**characterized in that**
the flow cross sections, in particular the diameters, of the expansion chambers (11, 12) correspond to the flow cross section, in particular the diameter (Ds), of the fuel line (2) arranged downstream of the throttle element (7).

14. Gas turbine assembly having a turbine assembly and having at least one nozzle device (1) according to one of the preceding claims.

## Revendications

1. Dispositif de buse (1) pour ajouter du carburant gazeux (14) à une chambre
de combustion d'un ensemble turbine à gaz comprenant
- un corps principal de buse (1a) avec des orifices de buse pour injecter le carburant dans la chambre de combustion, et
- un porte-buse (1b) avec au moins une conduite de carburant (2) pour la liaison d'écoulement entre une conduite de carburant (4) d'un distributeur de carburant (3) et le corps principal de la buse (1a), la conduite de carburant (2) étant orientée au moins par sections le long, et en particulier symétriquement par rapport, à un axe longitudinal médian (M), et
avec un élément d'étranglement (7) disposé en aval de la conduite de carburant du distributeur (4), notamment à l'extrémité amont de la conduite de carburant (2), pour
l'étranglement du débit de carburant à un débit de consigne prédéterminé,
- l'élément d'étranglement (7) comprenant au moins deux étages (S1, S2, S3) disposés en série du point de vue de la technique d'écoulement, chaque étage (S1, S2, S3) comprenant au moins une section de conduite (8, 9, 10) avec une section d'écoulement, une chambre de détente (11, 12) étant respectivement disposée entre les étages (S1, S2, S3), dont la section d'écoulement est plus grande que la section d'écoulement de l'étage (S1, S2) disposé en amont de celle-ci,
**caractérisé en ce que**
- une extension axiale des sections de conduite (8, 9, 10) est inférieure à un diamètre (Ds) de la conduite de carburant (2) en aval de l'élément d'étranglement, et
- la section de conduite (8, 9, 10) d'au moins un étage (S1, S2, S3) est disposée avec son axe longitudinal central (M1, M2, M3) décalé radialement par rapport à l'axe longitudinal central (M1, M2, M3) d'au moins un autre étage (S1, S2, S3) et/ou par rapport à l'axe longitudinal central (M) de la conduite de carburant (2) en aval de l'élément d'étranglement.

2. Dispositif de buse (1) selon la revendication 1, **caractérisé en ce qu'**au moins l'une des sections de conduite (8, 9, 10) à l'intérieur de l'élément d'étranglement (7) comporte une section d'écoulement plus petite que la conduite de carburant de distribution (4) et/ou la conduite de carburant (2) en aval de l'élément d'étranglement.

3. Dispositif de buse (1) selon la revendication 1 ou 2, **caractérisé en ce que** le premier étage (S1) disposé le plus en amont comporte la plus grande section d'écoulement des étages (S1, S2, S3) existants.

4. Dispositif de buse (1) selon l'une des revendications précédentes, **caractérisé en ce que** les étages (S1, S2, S3) disposés en aval d'un étage (S1, S2) du point de vue de la technique d'écoulement comportent chacun une section transversale d'écoulement égale ou inférieure à celle de l'étage (S1, S2) disposé respectivement en amont.

5. Dispositif de buse (1) selon l'une des revendications précédentes, **caractérisé en ce que** les sections de conduite (8, 9, 10) sont au moins partiellement coaxiales entre elles.

6. Dispositif de buse (1) selon l'une des revendications précédentes, **caractérisé en ce que** le décalage d'au moins deux sections de conduite (8, 9, 10), de préférence de deux étages successifs (S1, S2, S3), est différent radialement et/ou dans la direction de circulation, au moins deux étages successifs (S1, S2, S3) étant par exemple décalés l'un par rapport à l'autre dans la direction de circulation, le cas échéant respectivement, d'entre 90° et 270°, par exemple d'essentiellement 180°.

7. Dispositif de buse (1) selon la revendication 6, **caractérisé en ce que** le décalage est réalisé de telle sorte que les sections transversales d'écoulement des sections de conduite (8, 9, 10) d'au moins deux étages successifs (S1, S2, S3) se chevauchent peu, par exemple au maximum de 20 % de la section transversale d'écoulement, ou pas du tout, en ce qui concerne leur position radiale et/ou leur position dans la direction de circulation.

8. Dispositif de buse (1) selon l'une des revendications précédentes, **caractérisé**
**en ce que** la section de conduite (8, 9, 10) d'au moins l'un des étages (S1, S2, S3) est disposée avec son axe longitudinal médian (M1, M2, M3) incliné d'un angle (α1, α2, α3) par rapport à l'axe longitudinal médian (M1, M2, M3) de la section de conduite (8, 9, 10) d'un autre étage (S1, S2, S3) et/ou à l'axe longitudinal médian (M) de la conduite de carburant (2) en aval de l'élément d'étranglement (7).

9. Dispositif de buse (1) selon la revendication 8, **caractérisé en ce que** plusieurs sections de conduite (8, 9, 10) disposées les unes derrière les autres, de plusieurs étages (S1, S2, S3), sont disposées avec leurs axes longitudinaux centraux (M1, M2, M3) inclinés par rapport à l'axe longitudinal central (M) de la conduite de carburant (2) en aval de l'élément d'étranglement (7) selon l'angle (α1, α2, α3), les inclinaisons alternant respectivement, en particulier dans leurs orientations par rapport à la direction de circulation.

10. Dispositif de buse (1) selon l'une des revendications précédentes, **caractérisé en ce que** l'élément d'étranglement (7) comprend un corps creux (70) en particulier cylindrique, par exemple monolithique, ou est conçu comme tel, qui est fixé sur ou dans le porte-buse (1b) en assurant une étanchéité aux fluides.

11. Dispositif de buse (1) selon l'une des revendications précédentes, **caractérisé en ce que** l'élément d'étranglement (7), en particulier le corps creux (70), comprend au moins deux éléments individuels (7a, 7b, 7c) ou est formé à partir de ceux-ci, en particulier chaque élément individuel (7a, 7b, 7c) comportant au moins la section de conduite (8, 9, 10) d'un étage (S1, S2, S3).

12. Dispositif de buse (1) selon l'une des revendications précédentes, **caractérisé en ce que**, en présence de plusieurs chambres de détente (11, 12), leurs sections d'écoulement, en particulier leurs diamètres, sont de même taille.

13. Dispositif de buse (1) selon la revendication 12, **caractérisé en ce que** les sections d'écoulement, notamment les diamètres, des chambres de détente (11, 12) correspondent à la section d'écoulement, notamment au diamètre (Ds), de la conduite de carburant (2) disposée en aval de l'élément d'étranglement (7).

14. Ensemble turbine à gaz comprenant un ensemble turbine et au moins un dispositif de buse (1) selon l'une des revendications précédentes.
